# EUROPEAN PATENT APPLICATION

(11) **EP 2 335 497 A1**
(43) Date of publication of application: **22.06.2011**
(21) Application number: 09178784.6
(22) Date of filing: 11.12.2009
(51) Int. Cl.: A23L 1/0524, A23L 2/54, A23L 2/68

(54) **A jellified food product**

(71) Applicant: Nestec S.A., 1800 Vevey (CH)
(72) Inventor: Chevalier, Jean-François, 14100, COURTONNE LA MEURDRAC (FR); Marcilla, Rafael, 14100, LISIEUX (FR); Knauf, Herman, 14100, LISIEUX (FR)

(57) **Abstract**

The present invention is directed to a drinkable gas-containing food product having a flowing gel texture comprising a jelling agent, an acid, a liquid and a gas wherein the pH of the food product is in a range of 2.5 to 6.0, wherein the gas is dissolved in the gel matrix such that said product has a still state and a sparkling mouthfeel, and the volume of gas in the product is less than 10 g/L, preferably between 2 and 5 g/L.

## Description

### Field of the invention

The present invention concerns a drinkable gas containing products having a flowing gel texture. In particular, it relates to food products comprising a gas and having a gel texture which exhibit a pleasant sparkling effect in the mouth when consumed as a drink. The present invention also concerns a process for the preparation of a drinkable gas containing food product having a flowing gel texture.

### Background of the invention

Drinkable gas containing beverages are well known to everybody. Examples of drinkable gas containing beverages are carbonated soft drinks such as lemonades. Further, carbonated milk products are available on the market. In addition, carbonated drinks on the basis of fruit juices and vegetable extracts are also well accepted by the consumers.

The above drinks and beverages are liquid and do not contain any thickening agents. In the meantime, gel-like but still flowable carbonated drinks and beverages have been described. An alcoholic beverage having a light gel structure is described in WO 98/04158. These beverages contain a certain amount of a gelling agent such as carrageenan. EP 0796046 B1 describes a carbonated spoonable semi-solid cultured yoghurt product which may contain gums as a thickener.

It is object of the present invention to provide a drinkable gas containing food product having a gel texture with an improved stability to provide a pleasant sparkling mouth-feel upon consuming the food product, which provides a pleasant way of consumption to the consumer.

It is a further object of the present invention to provide an economic process for the manufacture of a drinkable gas containing food product having a stable flowing gel texture.

### Summary of the invention

The above objects are solved by means of the independent claims. The dependent claims relate to preferred embodiments of the subject-matter of the independent claims.

Thus, in a first aspect, the invention relates to a gas containing food product having a gel texture with a still state, that can be set by the consumer to a sparkling state by mechanical agitation such as hand shaking, preferably reversibly, said product comprising pectin, an acid, a liquid and a gas wherein the pH of the composition is in a range of 2.5 to 5.0. Preferably, according to the invention, the viscosity of the product is below 2000 centipoises measured in a Brookfield viscosimeter with module 93-C at a speed of 5RPM at 8°C, so that the product can be preferably consumed by drinking or sipping. In the rest of the specification, it will be considered that the product is drinkable, although being only a preferred embodiment.

A second aspect of the present invention concerns a process for the preparation of a gas containing food product having a gel texture with a still state, that can be, preferably reversibly, set by the consumer to a sparkling state by mechanical agitation such as hand shaking, said process comprising the steps of: mixing a pectin, an acid and a liquid and optionally at least one of sweeteners and flavoring agents; pasteurizing the mixture; injecting a gas to form a gas containing product; holding the gas containing product for a period between 0.25 to 5, preferably 0.5 to 2.5 minutes; storing the product under isobaric conditions and filling the product in containers under isobaric conditions.

### Brief description of the drawings

Additional features and advantages of the present invention are described in, and will be apparent from, the description of the presently preferred embodiments which are set out below with reference to the drawings in which:

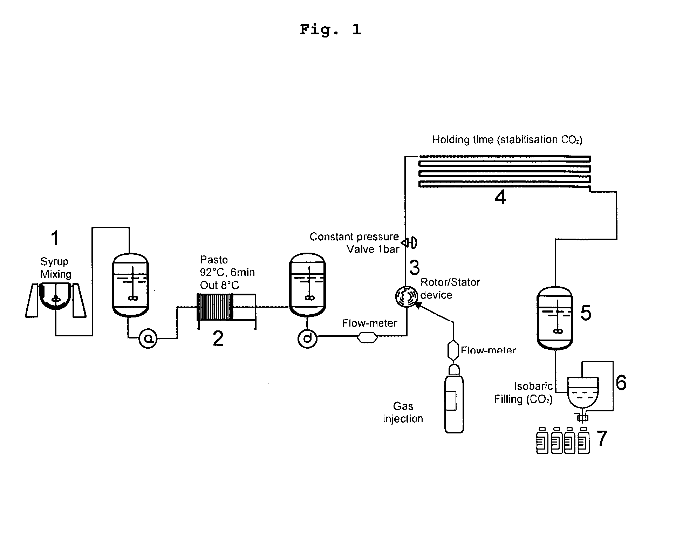

Figure 1 is a process diagram illustrating a way how to produce the drinkable gas containing food product of the present invention.

### Detailed description of the invention

In the detailed example given hereafter, the drinkable gas containing food product of the present invention has a gel texture which is flowable. When the drinkable gas containing food product is filled in a suitable container such as a bottle, cup, etc., and sealed, the gel is in a still state, i.e., no bubbles are visible in the product, because the major part of the volume of gas is uniformly dissolved in the gel matrix.

However, when the gel food product is subjected to a certain type of stress, typically during handshaking by the consumer, the gas in the food product de-gases from the gel matrix and exhibits a sparkling effect.

In addition to this still-to-sparkling effect, the consumer experiences a sparkling mouthfeel, whether the gas is dissolved in the gel matrix (still state) or not (sparkling state).

More importantly, with the food gel product according to the invention, the consumer has the possibility to adapt the intensity of the sparkling effect that is desired. Starting from the still product, the consumer can consume the product as such, without agitating it, or the consumer can shake more or less the product in order to obtain or corresponding more or less sparkling effect.

The shaking force required to trigger the sparkling effect from the still product is progressive. This means that if the shaking force that is applied by the consumer is not high, the gas released from the gel matrix into gas bubbles will be low, so that the sparkling effect and sparkling mouthfeel will also be low. The sparkling perception in mouth between a non-shaken product in the still state, and a shaken product in the sparkling state, will also be different due to the tixotropy of the gel, which makes it less viscous once energy is brought to the gel matrix by shaking. On the contrary, if the force applied during shaking by the consumer is higher, and/or longer in time, the gas dissolved in the gel matrix will be released as gas bubbles in higher quantities.

No values for the shaking force are given herein; as such a shaking force may vary from one person to another, depending on age, gender, physical condition, etc. But it is typically admitted for the present invention that the shaking force is that which can be applied by any person being older than 5.

If the product is cooled down to refrigerator temperature (typically at a temperature comprised between 4°C and 8°C), the gas bubbles are dissolved back in the product again and the gel texture is the same as before shaking, that is to say in a still state, i.e. with no noticeable sparkling appearance. In such conditions, the volume of gas undissolved - i.e. present in a gaseous state as gas bubbles - is so low that substantially no gas bubbles are visually noticeable by the consumer.

If the consumer shakes said product more energetically, and/or for a longer time, the degassing effect is higher, and the sparkling effect in the mouth will be more important.

The volume of gas in the product is comprised between 1g/l and 10 g per liter of gel product and said product has a sparkling mouthfeel.

It is essential to the drinkable gas containing food product of the present invention that the pH of the food product is in the acid range. According to the present invention, the pH of the composition is in a range of 2.5 to 5.0. Preferably, the pH is in a range of 3 to 4.5, with a range of 3.5 to 4.0 being more preferred.

Also importantly, according to the invention, the viscosity of the product is preferably below 2000 centipoises measured in a Brookfield viscosimeter with module 93-C at a speed of 5RPM at 8°C, so that the product is sufficiently fluid to be consumed by drinking.

The drinkable gas containing food product of the present invention comprises pectin as a gelling agent to provide the flowing gel characteristic of the product. The pectin that is suitable for the food product of the present invention is a high methylated pectin (HM pectin) or low methylated pectin (LM pectin). The amount of the pectin contained in the food product of the present invention is preferably from 0.1 to 5.0 wt.-%, more preferably 0.5 to 2.5 wt.-%, with a range of 1.0 to 2.0 wt.-% being most preferred.

The food product of the present invention also comprises an acid to adjust the pH in the required range. The presence of an acid in the food product of the present invention causes pH reduction which allows a better solution of the gas in the product. In addition, an acid pH contributes to a refreshing sensation and also works as a product preservative.

The amount of the acid in the product is preferably 0.01 to 1.0 wt.-%, more preferred 0.1 to 0.5 wt.-%, most preferred 0.2 to 0.4 wt.-%.

The liquid providing the matrix ― in combination with the pectin - for the gas of the drinkable gas containing food product, is preferably contained in an amount of 70.0 to 95.0 wt.-%, more preferred 80 to 90 wt.-%, with 85 to 88 wt.-% being most preferred.

A gas is added to the drinkable food product of the present invention to provide the sparkling effect upon agitation by the consumer. The concentration of gas in the product is preferably 1.0 to 10 g/l, more preferred 2.0 to 5.0 g/l and most preferred 2.0 to 4.0 g/l.

As mentioned above, it is important to the drinkable gas containing food product of the present invention that the pH is kept in a range of 2.5 to 5.0 in the product. In a preferred embodiment of the present invention, the pH is in a range of 3 to 4.5, with a range of 3.5 to 4.0 being most preferred.

The acid contained in the food product of the present invention may be any food-grade organic or inorganic acid. The organic acid is preferably selected from citric acid, lactic acid, acetic acid and mixtures thereof, with citric acid being more preferred.

The inorganic acids may be any inorganic acid which is of food-grade quality. Examples of inorganic acids are phosphoric acid, fumaric acid, carbonic acid and mixtures thereof, wherein phosphoric acid is more preferred.

The majority of the drinkable gas containing food product of the present invention consists of a liquid base which can be any liquid suitable for forming a drink. Preferably, the liquid base is selected from water, fruit juice, fruit pulp, coffee, tea, milk and derivates, soy based drinks, natural extracts, chocolate based drinks, smoothies and mixtures thereof, with water and fruit juice being more preferred.

Any gas that is appropriate for food purposes may be contained in the product of the invention. Suitable gases are, for example, CO₂, N₂, O₂, or even atmospheric air that would be filtered to match food safety requirements Mixtures of gases are also appropriate.

It is to be noted that CO₂ is the gas that offers the best properties in terms of dissolution in the food matrix, especially when pectin is used as a gelling agent such that the still to sparkling effect is reversible.

If appropriate, the drinkable gas containing food product of the present invention may also comprise up to 20 wt.-%, preferably 3.0 to 15.0, more preferred 10 to 13 wt.-% of at least one natural sugar. Examples of natural sugars are saccharose, all types of syrup glucose or syrup fructose. The natural sugar can be replaced, in fewer quantities for obtaining the same sweetening effect, by high intensity sweeteners, either natural or artificial. Examples of natural high intensity sweeteners are plant extracts like stevia extracts, or rebaudioside A. Examples of artificial sweeteners are aspartame, acesulfame, sucralose, saccharin, neotame and mixtures thereof. Mixtures of natural sugars and artificial sweeteners are also appropriate.

If desired, the food product of the present invention may also comprise up to 2.0 wt.-%, preferably 0.1 to 1.0 wt.-% of a flavoring agent. Usually, the flavoring agent is one or a combination of food-grade flavoring agents used in soft-drink applications. Examples of flavoring agents are those selected from lemon flavor, orange flavor, raspberry flavor, cola flavor, banana flavor, coffee flavor or blackcurrant flavor.

The drinkable gas containing food product of the present invention may be an alcohol-free food product or a food product which contains alcohol. In case of an alcoholic product, an alcohol such as ethanol is externally added. An alcoholic food product may contain up to 10 wt.-%, preferably 4.5 to 8 wt.-% of ethanol.

In a preferred embodiment of the present invention, the food product may further comprise additives such as vitamins, minerals and probiotics.

The drinkable gas containing food product of the present invention can be a beverage, preferably a carbonated beverage. Examples are carbonated soft drinks on the basis of water, flavored or not flavored, fruit juice, vegetables and an alcoholic fruit juice. Further products of the present invention are so-called "ready to drink" beverages such as spirit mixtures.

The drinkable gas containing food product having a flowing gel structure can be produced by a process using the injection of a liquid gas such as liquid CO₂. The process comprises the steps of mixing, heat treatment, gas injection, holding time, isobaric storage and isobaric filling.

In detail, one way of manufacturing the food products of the present invention is a process, as shown in **Figure 1**, which comprises the following steps:

### 1. Mixing

The ingredients such as pectin, an acid and a liquid and optionally at least one of the sweeteners and flavoring agents are mixed with standard agitation in a conventional mixing machine.

### 2. Heat treatment

Thereafter, a standard pasteurization of the above mixture is performed. The temperature is set at 85 to 140°C, preferably about 90°C during a period of 10 sec to 10 min, preferably 6 to 8 minutes followed by a temperature decrease of 8°C.

### 3. Gas injection

A gas, for example CO₂, is injected in a rotor-stator device at a continuous temperature of 2 to 30 °C, preferably 6 to 10°C. The amount of injected CO₂ is regulated according to the flow of the pre-mixed product. A control pressure valve is provided that ensures the holding time and a proper absorption of the gas by the product at the outlet of the rotor-stator system. The working pressure in the control pressure valve is 50 to 400, preferably 80 to 200 kPa.

### 4. Holding time

This step is provided to ensure a proper absorption of the gas in the liquid. This is first achieved after a suitable contact between the two phases. The holding time is set in a range of between 0.25 to 5, preferably 0.5 to 2.5, most preferred 0.5 to 1.5 minutes.

### 5. Isobaric storage

The stabilized product is stored in an isobaric tank previous to the filling step, having a head space pressure of 50kPa to 400 kPa. The temperature remains constant being the preferred a constant temperature of 5 °C. More generally, a control pressure valve is provided in the manufacturing system, which ensures the holding time and a proper absorption of the gas by the product at the outlet of the rotor-stator system. The working pressure in the control pressure valve is 50 to 400 kPa, preferably 80 to 200 kPa.

### 6. Isobaric filling

The filling is carried out by an isobaric filling system which can be carried out under aseptic conditions. If the filling is performed in non-isobaric devices, the final product will have a lower gas content.

Once the product is finally filled, the product is stored at a temperature of between 2 to 12°C for at least 45 days without losing gas under maintaining the gel texture.

In a preferred embodiment of the process of the invention, in the mixing step, an acid selected from organic and inorganic acids, for example those as mentioned above and a liquid selected from water, fruit juice, fruit pulp, coffee, tea, milk and derivates, soy based drinks, natural extracts, chocolate based drinks, smoothies and mixtures thereof are used.

In the step of gas injection, any food-grade gas may be used. A CO₂ stream is preferably used to produce a carbonated drinkable food product of the invention that exhibits an excellent sparkling effect.

The product of the present invention is filled up in suitable containers such as bottles and cups made of glass, aluminum or plastic. After filling, the containers are airtightly sealed according to standard procedures.

The process described provides a stable gas containing food product having a flowing gel structure. The product exhibits a pleasant sparkling effect when consumed as a drink. The product remains stable in the container for at least 45 days in cooled environments of 2 to 12°C.

The present invention is illustrated below by means of the non-limiting example.

The following ingredients are mixed in the described proportions:

| **Ingredients** | **Dosage** | **%** |
|---|---|---|
| Water | 52, 03 | 86,58% |
| White sugar | 7,18 | 11,95% |
| Pectin | 0, 66 | 1,10% |
| Citric Acid | 0,13 | 0,22% |
| Raspberry Flavor Ref 288264 | 0,09 | 0,15% |

The ingredients are mixed with standard agitation at a temperature of about 30°C.

The pH of the product (mixture) at this stage is within the same range of the pH for the final product, pH of 3 to 4.5.

After mixing, a standard pasteurization at a temperature of 92°C during 6 minutes is performed followed by a temperature decrease of 8°C.

Thereafter, CO₂ is injected in a rotor-stator device at a continuous temperature of 8°C. The amount of injected CO₂ is regulated according to the flow of the pre-mixed product. The working pressure in the control pressure valve is 100kPa. The final concentration of CO₂ gas in the product is 1.5 to 5 g/L (measured with Steinfurth equipment).

Thereafter, a holding time (stabilization time) is performed for a period of 45 seconds.

The product is stored in an isobaric tank having a head space pressure of 100kPa. Thereafter the product is filled in plastic bottles using in isobaric filler system. The bottled products are stored at 5°C.

The product has been tested and found to be a raspberry-taste refreshing drink that exhibits a pleasant sparkling mouth-feel when consumed.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A drinkable gas-containing food product having a flowing gel texture comprising a jelling agent, an acid, a liquid and a gas wherein the pH of the food product is in a range of 2.5 to 6.0, wherein the gas is dissolved in the gel matrix such that said product has a still state and a sparkling mouthfeel, and the volume of gas in the product is less than 10 g/L, preferably between 2 and 5 g/L.

2. A food product according to claim 1, wherein said dissolved gas degas upon hand-shaking or similar mechanical agitation, such that the volume of undissolved gas is lower than 10 g/L, preferably between 2 and 5 g/L of product, and said product has a sparkling mouthfeel.

3. A food product according to claims 1 or 2 wherein the jelling agent is pectin so that the gas is reversibly dissolved in said product.

4. A food product according to claim 3, wherein said undissolved gas can be redissolved into the product by lowering the temperature of said product between 0 and 20°C, preferably between 4 and 15°C, more preferably between 4 and 8°C.

5. The food product according to any of the preceding claims, comprising 0.1 to 5.0 wt.-%, preferably 0.5 to 2.5 wt.-% of pectin, 0.01 to 1.0 wt.-%, preferably 0.1 to 0.5 wt.-% of the acid, 70.0 to 95.0 wt.-%, preferably 80 to 90 wt.-% of the liquid.

6. The food product according to any of the preceding claims, wherein the pH is in a range of 2.5 to 5.

7. The food product according to any one of the preceding claims, wherein the acid is an organic or inorganic acid.

8. The food product according to claim 7, wherein the organic acid is selected from citric acid, acetic acid, lactic acid and mixtures thereof.

9. The food product according to claim 7, wherein the inorganic acid is selected from phosphoric acid, fumaric acid, carbonic acid and mixtures thereof.

10. The food product according to any one of claims 1 to 9, wherein the gas is selected from CO₂, N₂, O₂, air, and mixtures thereof.

11. The food product according to any one of claims 1 to 10 wherein the liquid is selected from water, fruit juice, fruit pulp, coffee, tea, milk and derivates, soy based drinks, natural extracts, chocolate based drinks, smoothies and mixtures thereof.

12. The food product according to any one of claims 1 to 11 further comprising up to 20 wt.-%, preferably 3.0 to 15.0 wt.-% of a sugar.

13. The food product according to claim 12 wherein the sugar is selected from natural sugars selected from saccharose, all types of syrup glucose or syrup fructose, and mixtures thereof.

14. The food product according to any of the preceding claims, further comprising up to 2.0 wt.-%, preferably 0.1 to 1.0 wt.-% of a flavoring agent.

15. The food product according to any of the preceding claims, further containing up 10 wt.-%, preferably 4.5 to 8 wt.-% of ethanol.

16. A process for the preparation of a drinkable gas containing food product having a flowing gel texture comprising the steps of:
- mixing a pectin, an acid and a liquid and optionally at least one of sweeteners and flavoring agents;
- pasteurizing the mixture;
- injecting a gas to form a gas containing product;
- holding the gas containing product for a period between 0.25 to 5, preferably 0.5 to 2.5 minutes;
- storing the product under isobaric conditions, and
- filling the product in containers under isobaric conditions.

17. The process according to claim 16 wherein the gas injection is carried out a pressure of 50 to 400 kPa, preferably 80 to 200 kPa.

18. The process according to claims 16 or 17 wherein, in the mixing step, an acid selected from organic and inorganic acids and a liquid selected from water, fruit juice, fruit pulp, coffee, tea, milk and derivates, soy based drinks, natural extracts, chocolate based drinks, smoothies and mixtures thereof are used.
